# EUROPEAN PATENT APPLICATION

(11) **EP 2 570 231 A1**
(43) Date of publication of application: **20.03.2013**
(21) Application number: 12183851.0
(22) Date of filing: 11.09.2012
(51) Int. Cl.: B23Q 1/28, B23Q 11/00

(54) **Device for stabilizing engagement between a slide and associated guides of said slide in a direction transverse to a sliding direction**

(30) Priority: 16.09.2011 IT MI20111673
(71) Applicant: Baruffaldi S.p.A., 20067 Tribiano (MI) (IT)
(72) Inventor: Molinari, Leonardo, 20067 Tribiano (MI) (IT); Nucci, Niccolò, 20067 Tribiano (MI) (IT)
(74) Representative: Raimondi, Margherita

(57) **Abstract**

Device for stabilizing engagement between a slide (20) movable on guides (11,21) of a support column (10) in a sliding direction (Y-Y) and the guides themselves, said slide having, associated with it, means (22) for locking its displacement relative to the column (10), said device comprising at least one hydraulic tie-rod (110) extending parallel to the transverse direction (X-X) which is perpendicular to the sliding direction (Y-Y) of the slide (20) and able to be operated against the action of pressing means (116) when the slide (20) reaches a predefined working position.

## Description

The present invention relates to a device for stabilizing engagement between a slide movable on guides in both senses of a sliding direction and the guides themselves of the slide.

It is known, in the technical sector of mechanical machining operations performed by means of machine tools and/or work centres, that the different machining operations carried out on a large number of workpieces involve the use in succession, for the same workpiece, of several tools in a programmed and automatically controlled sequence. For this purpose, the workpiece is usually mounted on a lathe or similar work centre, which is provided with an auxiliary apparatus consisting of a turret which carries several tools arranged radially and/or frontally on a rotating plate, the controlled rotation of which brings the tool, prechosen in each case, into the working position in order to perform the required machining of the workpiece.

An example of the prior art is described in WO 02/066205 where the slide is moved on prestressed recirculating-roller guides; these devices are substantially wear-free and operated by a controlled motor which stops the slide in the working position and maintains its position by means of the motor torque.

Since there is no wear, the apparatus is usually equipped with means for balancing the weight of the chuck so as to reduce the power of the motor necessary for movement and with a simple safety lock which, in the event of a power failure, moves out in a transverse direction and engages with the teeth of a rack in order to prevent the chuck, which is no longer retained by the motor torque, from falling freely in the vertical sliding direction.

It is however also known, in the technical sector, that, for particular unaligned machining operations, such as planing, boring and the like, it is required to perform displacement of the tools which are mounted on the rotating plate of the turret, in both senses of the direction (so-called Y axis) perpendicular to the axis of rotation of the machine, and for this purpose the machine is equipped with a movable surface which carries a column at right angles to the movable surface itself.

This displacement along the Y axis is therefore performed by means of a slide movable on guides which are fixed to the said column mounted on the movable surface of the machine tool.

Although fulfilling their function, these movements nevertheless have the drawback arising from the fact that, once the working position has been reached and the slide locked using conventional means, the rotating plate of the turret is located in a position where it projects considerably from the guides for sliding along the Y direction, generating, as a result of its weight and the shear stresses which are often of a discontinuous nature, undesirable vibrations and movements both about the said Y axis in the vertical sliding plane of the slide, which contains the said Y direction, and about a transverse direction, at right angles to said plane which contains the Y axis; these movements, in addition to increasing the wear of the component parts of the turret, also result in defects in machining of the workpiece with a consequent increase in the production rejects. Although typical of the applications involving machine-tool turrets, this phenomenon also occurs in different applications which require the controlled movement of a slide along a given axis. The technical problem which is posed, therefore, is that of providing a device to be associated with a slide movable on fixed sliding guides arranged in a Y sliding direction lying in the plane itself of the guides, which device, once the slide has been locked in position along the said Y sliding direction, is able to ensure more stable relative engagement between the slide and the sliding guides, in order to prevent relative rotational and/or translational movements of the slide and guides in directions contained in the plane of the guides and/or in planes incident thereon, said movements being due to the high shear stresses, which are often discontinuous in nature and act greatly during projection, and also to wear of the parts.

By way of a particular example of application a turret support slide of a machine tool, which is movable along the so-called Y axis of the machine, is considered.

In connection with this problem it is also required that the stabilization device should retain small dimensions, be easy and inexpensive to produce and assemble and be able to be applied easily also to already existing turrets using normal standardized connection means.

These results are achieved according to the present invention by a device for stabilizing engagement between a slide and the guides arranged along a sliding axis of the slide itself according to the characteristic features of Claim 1.

Further details may be obtained from the following description of a non-limiting example of embodiment of the subject of the present invention provided with reference to the accompanying drawings in which:
Figure 1: shows a front view of an example of embodiment of a device according to the present invention applied to a machine tool turret;
Figure 2: shows a side view of the device according to Fig. 1;
Figure 3: shows a partially exploded front view of the column and the slide with the device according to Fig. 1;
Figure 4: shows a bottom view of the parts of Fig. 3 separated from each other;
Figure 5: shows a bottom view of the parts of Fig. 3 assembled;
Figure 6: shows a view partially cross-sectioned along a plane indicated by VI-VI in Fig. 2 and
Figure 7: shows a view partially cross-sectioned along a plane indicated by VII-VII in Fig. 2.

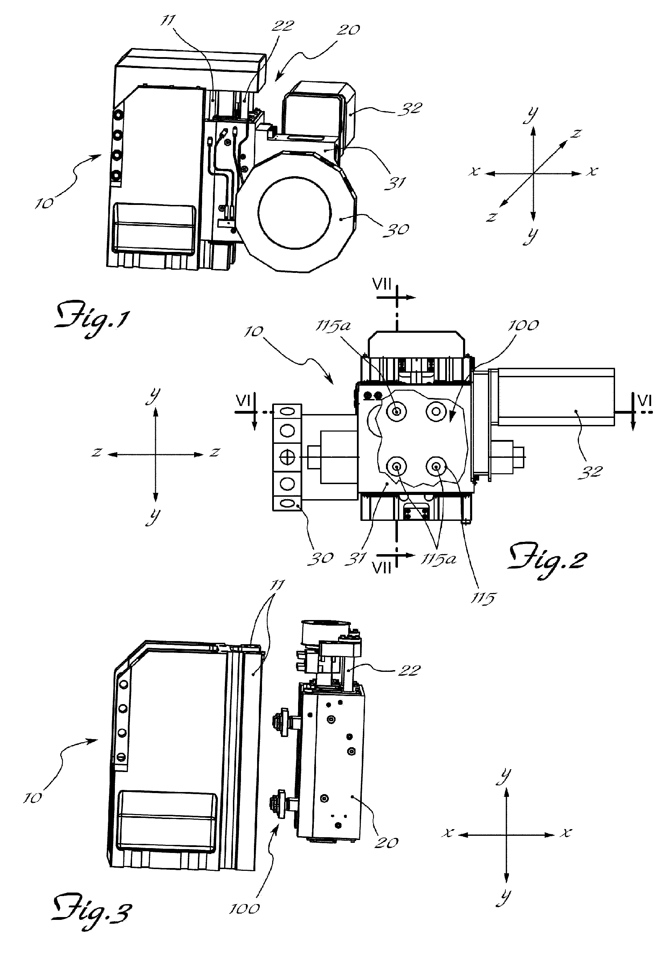

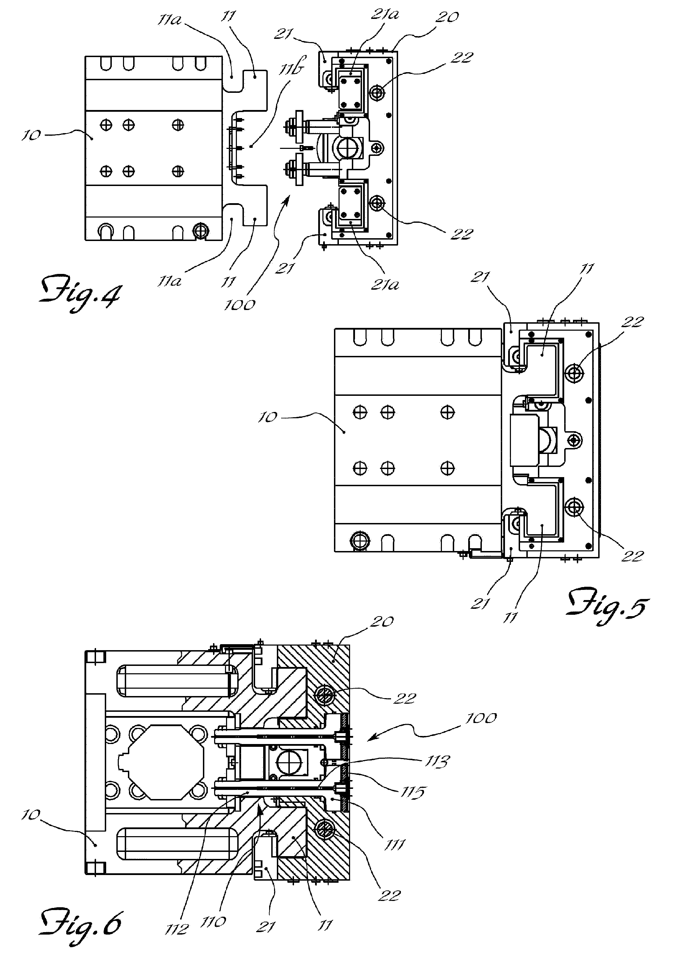

Assuming solely for the sake of convenience of the description and without a limiting meaning a set of three reference directions, i.e. longitudinal direction Z-Z, transverse direction X-X lying along the support surface (not shown) of a machine tool and vertical direction Y-Y at right angles to the said support surface and defining the sliding direction (so-called Y axis) of a slide, Fig. 1 shows:
- a support column 10 to which guides 11 parallel to the vertical direction Y-Y are fixed;
- a slide 20 engaged with said column 10, slidable on said guides 11 by means of corresponding runners 21 (Fig. 4) and able to carry:
- an associated device 31 which extends outwards from the column 10 and on which a tool-carrying plate 30 and, in the example shown, a motor 32 for operating the tools are mounted, the assembly forming overall a turret for machine tools.

In detail (Figs. 4,5,6), the guides 11 of the column 10 have the form of an overturned C so as to define a sliding seat 11a for corresponding runners 21 of the slide 20, said runners forming in turn an internal seat 21a for receiving the guides 11 so as to ensure precision and stability of the relative engagement in the longitudinal direction **Z-Z** and transverse direction X-X, avoiding relative rotational and/or translational movements of the slide and guides.

The guides 11 also form a recess 11b situated opposite the slide 20 and designed to house the mechanisms for movement of the slide along the Y axis, such as recirculating ball screw/lead-nut devices or the like.

Also connected to the assembly are uprights 22 (Figs. 3,6) which are parallel to the vertical sliding direction (Y-Y) of the slide and which have, combined therewith, expansion bushes (not shown) which are situated inside the slide 20 and are used to perform locking in position of the slide 20, oil being supplied under pressure to said bushes which clamp the said uprights.

As shown in detail in Figs. 4, 5, 6 and 7, the turret according to the invention comprises stabilization means 100 which are arranged between the slide 20 and the column 10 parallel to the transverse direction X-X and are designed to keep the former 20 against the latter 10 with precision once the slide has reached the programmed working position and has been locked by the bushes acting on the columns 22.

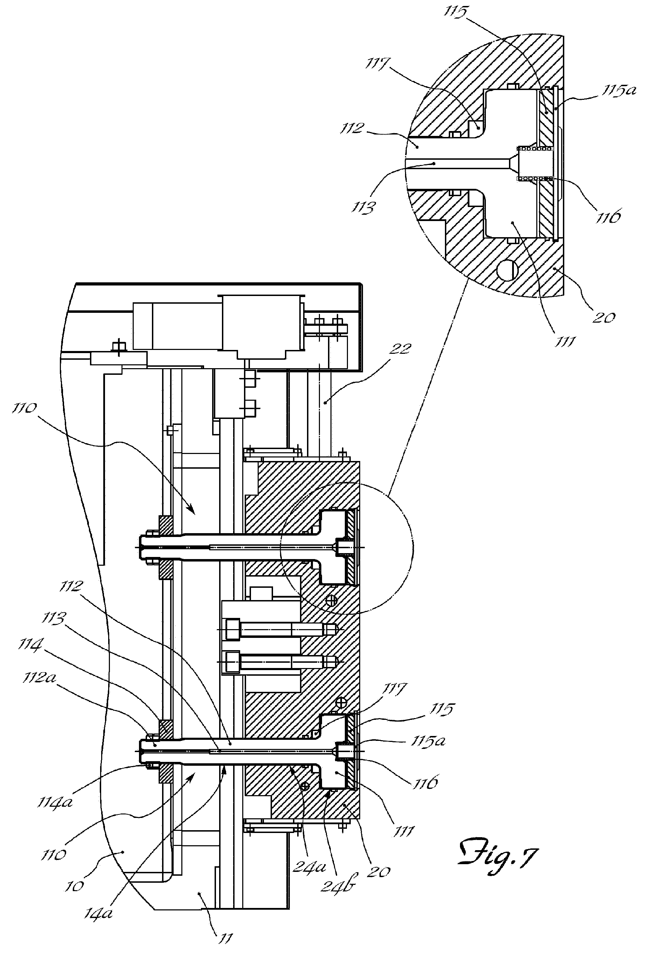

In detail (Figs. 6, 7) said stabilization means 100 comprise at least two pairs of tie-rods, which in the example are arranged alongside each other in the longitudinal direction X-X and above one another in the sliding direction Y-Y; the tie-rods are formed by a piston 110 with a head 111 connected to a stem 112 through which a drainage duct 113 passes in the longitudinal direction.

The piston 110 is inserted through associated first passages 24a in the slide 20 and 14a in the column 10 so that the head 111 of the piston is housed inside a seat 24b of the slide and the free end 112a of the stem 112 projects in the transverse direction X-X beyond the guides 11 and engages with a reaction washer 114 which is axially locked by means of ring nuts 114a.

On the side where the slide 20 is situated, the piston is axially contained by a cover 115 retained on the slide by a resilient ring 115a.

Once installation has been completed a chamber 117 connected by means of associated ducts to pressurized fluid supply means (not shown) is formed between the slide 20 and the head 111 of the piston 110.

It is also envisaged that a spring 116 is arranged between the cover 115 and the head 111 of the piston and is able to act on the piston head, reacting against the cover, so as to push the piston 110 in the transverse direction X-X.

With this configuration the operating principle of the turret is as follows:
- once the various parts described have been assembled, the expansion bushes are kept in the non-supplied condition so that the slide 20 is free to move in both senses of the vertical sliding direction Y-Y;
- in this condition the piston 110 is pressed by the spring 116 towards the column 10 so that the washer 114 does not exert a tensile force against the column itself, thus favouring relative sliding of the slide/column;
- via programming and operating means (not shown) the slide 20 is brought into the desired working position and
- pressurized fluid is supplied to the expansion bushes which lock the slide on the columns 22, preventing further displacements in the direction Y-Y;
- pressurized fluid is supplied to the chamber 117 formed between the slide 20 and the piston 110 so that the latter is pushed towards the cover 115, overcoming the action of the spring 116; consequently the washer 114 is pulled against the column 10 and the slide 20 is compressed against the guides 11 of the column itself;
- programmed machining is started and once completed the reverse series of operations is performed, with discharging of the chamber 117, release of the tie-rod 110 and locking of the slide, so as to reactivate the cycle for positioning the slide for a new machining operation.

It is also envisaged that the hydraulic tie-rods 110 are preferably mounted in pairs as shown in order to improve further the slide stabilization effect.

It is therefore clear how the turret according to the invention has an improved stability and machining precision owing to the means for stabilizing the slide with respect to the column, said stabilization means being able to produce high forces while maintaining small dimensions and being easy to assemble/disassemble with a reduced need for maintenance.

The stabilization efficiency is even more important when the guides, even though provided with means for performing adjustment in all directions, have an albeit small amount of play following more or less prolonged operation, owing to wear caused by sliding friction: the pairs of pistons 110 are in fact able to take up the play while continuing to prevent movements of the slide about the axis Y-Y and Z-Z at right angles thereto and along the axis X-X.

Although described in connection with certain constructional forms and certain preferred examples of embodiment of the invention, it is understood that the scope of protection of the present patent is defined solely by the following claims.

## Claims

1. Device for stabilizing engagement between a slide (20) movable on guides (11,21) of a support column (10) in a sliding direction (Y-Y) and the guides themselves, said slide having, associated with it, means for locking its displacement relative to the column (10), **characterized in that** it comprises at least two pairs of hydraulic tie-rods (110) which are parallel to each other and extend parallel to a transverse direction (X-X) perpendicular to the sliding direction (Y-Y) of the slide (20) and can be operated displaceably in the opposite direction to that of engagement between slide/guide (11,21) against the action of pressing means (116) when the slide (20) reaches a predefined working position.

2. Device according to Claim 1, **characterized in that** said tie-rods are arranged alongside each other in the longitudinal direction (X-X) and above one another in the sliding direction (Y-Y).

3. Device according to Claim 1, **characterized in that** each hydraulic tie-rod (110) comprises a piston with a head (111) which is connected to a stem (112) passed through in the longitudinal direction by a drainage duct (113).

4. Device according to Claim 3, **characterized in that** the slide (20) has at least one seat (24b) for receiving the head (111) of the piston (110).

5. Device according to Claim 1, **characterized in that** said slide (20) and column (10) have respective coaxial passages (24a,14a) which extend in the transverse direction (X-X) and through which the stem (112) of a respective tie-rod passes.

6. Device according to Claim 3, **characterized in that**, in working conditions, the free end (112a) of the stem (112) projects in the transverse direction (X-X) beyond the guides (11) and is associated with a reaction washer (114) axially locked by means of ring nuts (114a).

7. Device according to Claim 3, **characterized in that**, on the side where the slide (20) is situated, the piston is axially contained by a cover (115) retained on the slide by a resilient ring (115a).

8. Device according to Claim 7, **characterized in that** said pressing means comprise a spring (116) arranged in between the cover (115) and the head (111) of the piston and able to act on the piston head, reacting against the cover, so as to push the piston (110) in the transverse direction (X-X).

9. Device according to Claim 1, **characterized in that** a chamber (117) connected by means of associated ducts to pressurized fluid supply means is formed between the slide (20) and the head (111) of the piston (110).

10. Device according to Claim 8, **characterized in that** the pressure of the fluid supplied to the hydraulic tie-rods depends on the load forces acting on the slide.

11. Device according to Claim 1, **characterized in that** the slide (20) carries a tool-holder turret (30,31,32).

12. Device according to Claim 1, **characterized in that** the sliding direction (Y-Y) of the slide (20) is perpendicular to the centring axis of the turret.
